# EUROPÄISCHE PATENTSCHRIFT

(11) **EP 1 530 011 B1**
(45) Veröffentlichungstag und Bekanntmachung des Hinweises auf die Patenterteilung: **02.08.2006**
(21) Anmeldenummer: 04105284.6
(22) Anmeldetag: 25.10.2004
(51) Int. Cl.: F24H 8/00, F16T 1/14

(54) **Heizgerät mit einer Kondensatablaufvorrichtung**
Heating apparatus with a condensate drainage
Chaudière avec un drainage du condensat

(30) Priorität: 04.11.2003 DE 10351439
(43) Veröffentlichungstag der Anmeldung: 11.05.2005
(73) Patentinhaber: ROBERT BOSCH GMBH, 70442 Stuttgart (DE)
(72) Erfinder: Oehrlein, Manfred, 73278 Schlierbach (DE); Lemke, Helmut, 73207 Plochingen (DE); Schweitzer, Bertram, 73728 Esslingen (DE)

(56) Entgegenhaltungen:
- DE-A1- 4 134 230
- DE-U1- 9 200 785
- US-A- 1 355 746

## Beschreibung

Die Erfindung betrifft ein Heizgerät mit einer Kondensatablaufvorrichtung nach dem Oberbegriff des Anspruchs 1. Ein solches Heizgerät ist aus dem Dokument DE-A-41 34 230 bekannt.

### Stand der Technik

Heizgeräte, sogenannte Brennwertheizgeräte, bei denen die Kondensationswärme des im Verbrennungsgas des Brenners enthaltenen Wasserdampfes genutzt wird, bzw. bei denen das Abgas auf einen unter Taupunkttemperatur liegenden Wert abgekühlt wird, verfügen über eine Kondensatablaufvorrichtung, die zur Sicherung gegen unerwünschten Abgasaustritt einen Siphon zum Speichern einer Sperrflüssigkeit aufweist. Dabei wird die Sperrflüssigkeit durch das im Heizgerät anfallende Kondensat gebildet, dessen Überschuss über den Siphon in eine Entwässerung abgeleitet wird.

Aus DE 41 34 230 A1 ist zur Aufrechterhaltung einer bestimmten Mindest-Stauhöhe innerhalb des Siphons im Kondensatablauf ein Ventil angeordnet, das mit einem in Abhängigkeit von der Höhe der Kondensatsäule gesteuerten Ventilkörper zusammenwirkt. Der Ventilkörper ist dabei von unten mittels einer Feder gegen einen Ventilsitz gepresst, der bei einer bestimmten Höhe der Kondensatsäule unter Überwindung der Kraft der Feder öffnet. Die Sicherung der Mindest-Stauhöhe ist dabei lediglich von der Kondensatsäule und von der Federkraft der Feder abhängig. Da das Brenngas-Luftgemisch unter Gebläsedruck zugeführt und dadurch auch das Abgas unter Druck in die Abgasleitung weitergeleitet wird, wirkt auch auf die Kondensatsäule im Siphons ein Druck ein. Damit die Sperrflüssigkeit im Siphon auf Grund des Drucks nicht aus dem Siphon gedrückt wird, ist eine entsprechend hohe Kondensatsäule notwendig.

Die Forderung nach einer kompakten Heizeinrichtung schließt aber einen derartigen Siphon zur Aufnahme einer hohen Kondensatsäule aus.

Aufgabe der vorliegenden Erfindung ist es, eine Kondensatablaufvorrichtung zu schaffen, die mit einer geringeren Kondensatsäule innerhalb des Siphons auskommt.

### Vorteile der Erfindung

Das erfindungsgemäße Heizgerät mit den kennzeichnenden Maßnahmen des Anspruchs 1 hat den Vorteil, dass ein vom Abgasdruck abhängiger Kondensatablauf mit einem Siphon geringer Bauhöhe möglich ist. Durch die erfindungsgemäßen Maßnahmen ist es möglich, den Kondensatablauf zu sperren, wenn der Druck im Heizgerät und/oder im Abgassystem über den normalen Betriebsdruck, zum Beispiel durch Drosseln des Abgasweges in Folge Fremdeinwirkung, steigt.

Durch die in den Unteransprüchen aufgeführten Maßnahmen sind vorteilhafte Weiterbildungen der Erfindung möglich. Ein besonders kompakter Aufbau ist dadurch möglich, wenn die Membran an der der Siphonöffnung abgewandten Seite von einem Druckraum umgeben ist, der mit dem Abgassammelraum des Heizgerätes in Verbindung steht. Dadurch wird der im Heizgerät und/oder im Abgassystem herrschende Druck zum Schließen der Siphonöffnung in den Druckraum übertragen. Das Offenhalten der Siphonöffnung für die Normaldruckbedingungen im Heizgerät und/oder im Abgassystem erfolgt entweder mittels einer Feder, die von der Seite der Siphonöffnung gegen die Membran drückt, oder mittels einer sich im Siphon aufbauenden Wassersäule, wobei die Flächenverhältnisse der Membran so abgestimmt sind, dass das Ventil bei normalem Betriebsdruck auf Grund einer geringeren Wassersäule im Siphon geschlossen ist und erst, wenn der Kondensatanfall steigt und damit die Kondensatsäule im Siphon sich erhöht, das Ventil öffnet und das Kondensat ablaufen kann. Die Füllhöhe und damit die Kondensatsäule im Siphon sinkt dann wieder, so dass die Membran das Ventil wieder schließt.

### Zeichnung

Zwei Ausführungsbeispiele der Erfindung sind in der Zeichnung dargestellt und in der nachfolgenden Beschreibung näher erläutert.

Es zeigen
- Figur 1: eine Schnittdarstellung durch ein Heizgerät mit einer Kondensatablaufvorrichtung gemäß einem ersten Ausführungsbeispiel mit einem geöffneten Ventil,
- Figur 2: das Ventil gemäß Figur 1 in geschlossener Stellung und
- Figur 3: eine Schnittdarstellung durch ein Heizgerät mit einer Kondensatablaufvorrichtung gemäß einem zweiten Ausführungsbeispiel.

### Ausführungsbeispiele

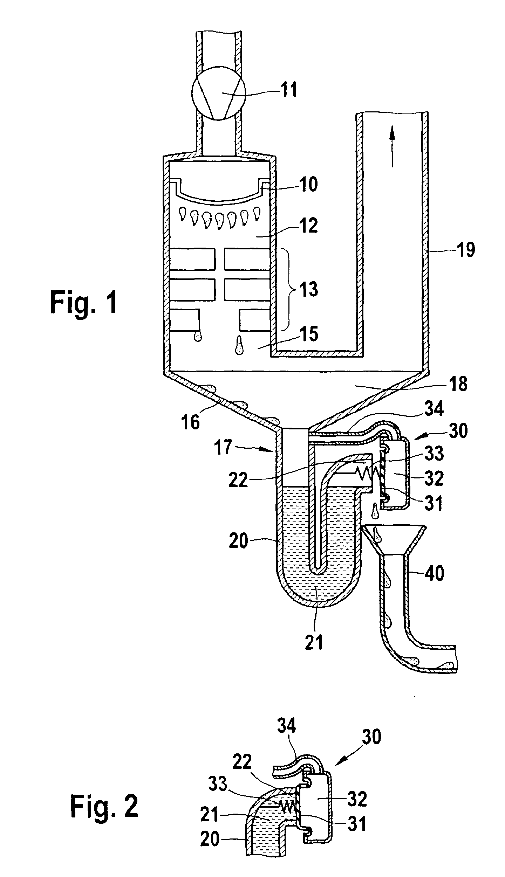

Das Heizgerät nach Figur 1 hat einen Brenner 10, dem ein Brenngas-Luftgemisch durch ein Gebläse 11 zugeführt wird. Der Brenner 10 sitzt am oberen Ende einer Brennkammer 12, an die sich eine Wärmetauschereinheit 13 anschließt. Stromab der Wärmetauschereinheit 13 ist ein Abgasraum 15 mit einer Kondensatsammelwanne 16 angeordnet, an deren tiefster Stelle eine Kondensatablaufvorrichtung 17 vorgesehen ist. Der Abgassammelraum 15 geht in eine Abgasführung 18 über, an die ein senkrecht nach oben führendes Abgasrohr 19 angeschlossen ist, über welches das mit einem Pfeil dargestellte Heiz- bzw. Abgas abgeführt wird.

Die Wärmetauschereinheit 13 weist nicht dargestellte, Wasser führende Kanäle zum Erhitzen des Heizwassers auf. Die durch die Wärmetauschereinheit 13 abgekühlten Brenngase des Brenners 10 geben die Wärme an das in den Heizkanälen zirkulierende Heizwasser ab, wobei die Wärmetauschereinheit 13 derart ausgeführt ist, dass eine Abkühlung des Brenngases unterhalb des Taupunktes des Wasserdampfes abgekühlt wird.

An die Kondensatablaufvorrichtung 17 ist ein Siphon 20 angeschlossen, der mit einer Sperrflüssigkeit 21 gefüllt ist. Die Sperrflüssigkeit 21 wird durch das in der Kondensatsammelwanne 16 gesammelte Kondensat gebildet und verhindert einen Austritt von Abgasen in den Aufstellungsraum des Heizgerätes. Am Auslaufende weist der Siphon 20 eine Siphonöffnung 22 auf. Der Siphonöffnung 22 ist ein Ventil 30 zum Verschließen der Öffnung 22 zugeordnet. Das Ventil 30 wird von einer Membran 31 und einem die Membran 31 an der der Siphonöffnung 22 abgewandten Seite umschließenden Druckraum 32 gebildet. Die der Öffnung 22 zugewandte Seite der Membran 31 ist gegen eine Druckfeder 33 abgestützt. Der Druckraum 32 des Ventils 30 steht über eine Druckleitung 34 mit dem Abgasraum 15 in Verbindung, wobei im vorliegenden Ausführungsbeispiel die Druckleitung 34 im Bereich des Einlasses der Kondensatablaufvorrichtung 17 in die Abgasführung 18 mündet. Die Membran 31 ist so ausgebildet, dass bei ansteigendem Druck im Abgasraum 15 und damit im Druckraum 32 die Membran 31 gegen die Ringfläche der Siphonöffnung 22 drückt und dadurch den Siphon 20 an der Auslaufseite verschließt. Der Siphonöffnung 22 ist schließlich ein Kondensatablauf 40 zugeordnet, der das über die Siphonöffnung 22 austretende Kondensat in eine nicht dargestellte Entwässerung abführt.

In Figur 2 ist das Ventil 30 gemäß Figur 1 in geschlossener Stellung dargestellt. Die geschlossene Stellung des Ventils 30 mit der auf die Siphonöffnung 22 einwirkenden Membran 31 wird erreicht, wenn im Abgasraum 15 und damit im Druckraum 32 der vom Gebläse 11 erzeugte Druck über einen von der Druckfeder 33 eingestellten Druckwert ansteigt. Der Druckanstieg kann dabei entweder durch eine entsprechend höhere Gebläsedrehzahl des Gebläses 11 oder durch einen höheren Strömungswiderstand im Abgasrohr 19 entstehen. In diesen Fällen wird die Siphonöffnung 22 verschlossen, so dass die Sperrflüssigkeit 21 nicht aus dem Siphon 20 gedrückt werden kann.

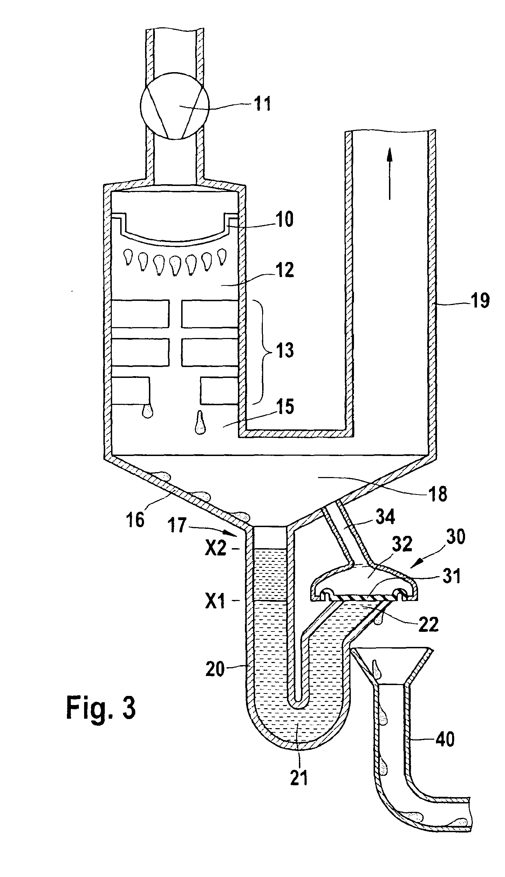

Ein zweites Ausführungsbeispiel geht aus Figur 3 hervor. Hierbei sind gleiche Bauteile mit gleichen Bezugszeichen bezeichnet, wobei die Siphonöffnung 22 des Ventils 30 in geschlossenem Zustand dargestellt ist. Das Öffnen der Siphonöffnung 22 erfolgt bei diesem Ausführungsbeispiel in Abhängigkeit von der auf die Membran 31 wirkenden Kraft der im Siphon 20 ausgebildeten Wassersäule der Sperrflüssigkeit 21. Liegt die mit X1 gekennzeichnete Normalhöhe der Wassersäule im Siphon 20 vor, so liegen auf Grund des Flächenverhältnisses des Querschnittes des Siphons 20 an der Stelle X1 und des Querschnittes der Siphonöffnung 22 an der Membran 31 derartige Druckverhältnisse vor, dass der in die Druckkammer 32 wirkende Druck die Membran 31 gegen die Siphonöffnung 22 drückt. Steigt hingegen das Kondensat im Siphon 20 bis zu einer mit X2 gekennzeichneten Höhe der Wassersäule an, ist die von der Wassersäule im Siphon 20 ausgehende Kraft größer als die von der Membran 31 auf die Siphonöffnung 22 wirkende Kraft, wodurch die Membran 31 von der Siphonöffnung 22 abgehoben wird und dadurch das Kondensat aus dem Siphon in den Kondensatablauf 40 ablaufen kann.

Dabei sinkt die Füllhöhe der Sperrflüssigkeit 21 innerhalb des Siphons 20 bis das Niveau des Füllstands X1 erreicht wird, bei dem wieder ausgeglichene Druckkräfte wirken und die Membran 31 die Siphonöffnung 22 wieder schließt.

## Patentansprüche

1. Heizgerät mit einer Kondensatablaufvorrichtung sowie mit einem Brenner und einer Wärmeübertragereinheit, in weicher das Verbrennungsgas des Brenners unter den Taupunkt des Wasserdampfes abgekühlt wird, wobei die Kondensatablaufvorrichtung zur Sicherung gegen unerwünschten Gasaustritt einen Siphon zum Speichern einer Sperrfflüssigkeit (21) aufweist und wobei die Kondensatablaufvorrichtung ein Ventil (30) enthält, das für eine Mindesthöhe der Sperrflüssigkeit im Siphon sorgt, **dadurch gekennzeichnet, dass** das Ventil (30) von einer Membran (31) gebildet ist, die entgegengerichtet zur Auslaufrichtung der Sperrflüssigkeit (21) vom Abgasdruck beaufschlagt ist, so dass eine am Auslauf des Siphons ausgebildete Siphonöffnung (22) von der Membran (31) verschließbar ist.

2. Heizgerät nach Anspruch 1, **dadurch gekennzeichnet, dass** die Membran (31) an der der Siphonöffnung (22) abgewandten Seite von einem Druckraum (32) umgeben ist, der mit Abgasdruck beaufschlagbar ist.

3. Heizgerät nach Anspruch 2, **dadurch gekennzeichnet, dass** der Druckraum (32) über eine Druckleitung (34) mit einem Abgasraum (15) in Verbindung steht.

4. Heizgerät nach Anspruch 2, **dadurch gekennzeichnet, dass** die Membran (31) an der dem Druckraum (32) abgewandten Seite von einer Feder (33) beaufschlagt ist und dass die Federkraft der Feder (33) derart bemessen ist, dass bei einem über einen vorgegebenen Druckwerl im Abgasraum (15) ansteigenden Druck die Membran (31) die Siphonöffnung (22) schließt.

5. Heizgerät nach Anspruch 1, **dadurch gekennzeichnet, dass** die an der Siphonöffnung (22) auf die Membran (21) wirkende Fläche und die im Siphon (20) mit dem Abgasraum (15) in Verbindung stehende Querschnittsfläche der Sperrflüssigkeit (21) derart im Verhältnis stehen, dass bei Erreichen einer vorgegebenen Wassersäule der Sperrflüssigkeit (21) im Siphon (20) die Membran (31) von der Siphonöffnung (22) abgehoben wird.

## Claims

1. A heating device comprising a condensate drain device and comprising a burner and a heat transfer unit in which the combustion gas of the burner is cooled below the dew point of the water vapour, wherein the condensate drain device has a siphon for storing a sealing liquid (21) to guard against undesirable escape of gas and the condensate drain device (30) contains a valve which ensure a minimum level of the sealing liquid in the siphon, **characterised in that** the valve (30) is formed by a membrane (31) which is acted upon by exhaust gas pressure in the opposite direction to the run-out direction of the sealing liquid (21) so that a siphon opening (22) formed at the outlet of the siphon can be closed by the membrane (31).

2. The heating device according to claim 1, **characterised in that** the membrane (31) is surrounded on the side facing away from the siphon opening (22) by a pressure chamber (32) which is acted upon by exhaust gas.

3. The heating device according to claim 2, **characterised in that** the pressure chamber (32) communicates with an exhaust gas chamber (15) via a pressure pipe (34).

4. The heating device according to claim 2, **characterised in that** the membrane (31) is acted upon by a spring (33) on the side facing away from the pressure chamber (32) and that the spring force of the spring (33) is dimensioned such that at a pressure which rises above a pre-determined pressure level in the exhaust gas chamber (15), the membrane (31) closes the siphon opening (22).

5. The heating device according to claim 1, **characterised in that** the surface area acting on the membrane (21) at the siphon opening (22) and the cross-sectional area of the sealing liquid (21) in the siphon (20) in communication with the exhaust gas chamber (15) are related in such a manner that when a pre-determined water column of the sealing liquid (21) is reached in the siphon (20), the membrane (31) is raised from the siphon opening (22).

## Revendications

1. Appareil de chauffage avec un dispositif d'écoulement de condensat et avec un brûleur et une unité de transmission de chaleur, dans laquelle le gaz de combustion du brûleur est refroidi au-dessous de la température de rosée de la vapeur d'eau, le dispositif d'écoulement de condensat présentant un siphon pour stocker un liquide de blocage (21) pour se protéger contre la sortie de gaz inopportune et le dispositif d'écoulement de condensat contenant une vanne (30) qui assure une hauteur minimale du liquide de blocage dans le siphon, **caractérisé en ce que** la vanne (30) est formée par une membrane (31), qui est sollicitée dans le sens contraire au sens de sortie du liquide de blocage (21) par la pression de gaz brûlé, de sorte qu'une ouverture de siphon (22) réalisée sur la sortie du siphon peut être fermée par la membrane (31).

2. Appareil de chauffage selon la revendication 1, **caractérisé en ce que** la membrane (31) est entourée sur le côté opposé à l'ouverture de siphon (22) par un espace de pression (32), qui peut être alimenté avec la pression de gaz brûlé.

3. Appareil de chauffage selon la revendication 2, **caractérisé en ce que** l'espace de pression (32) est en liaison avec un espace de gaz de brûlé (15) au moyen d'une conduite sous pression (34).

4. Appareil de chauffage selon la revendication 2, **caractérisé en ce que** la membrane (31) est sollicitée par un ressort (33) sur le côté opposé à l'espace de pression (32) et **en ce que** la force élastique du ressort (33) est dimensionnée de telle sorte que, pour une valeur de pression augmentant au-delà d'une valeur de pression prédéfinie dans l'espace de gaz brûlé (15), la membrane (31) ferme l'ouverture du siphon (22).

5. Appareil de chauffage selon la revendication 1, **caractérisé en ce que** la surface agissant sur l'ouverture du siphon (22) sur la membrane (31) et la surface de section, en liaison avec l'espace de gaz brûlé (15), du liquide de blocage (21) sont en rapport de sorte que, lorsque la hauteur d'une colonne d'eau prédéfinie du liquide de blocage (21) a été atteinte dans le siphon (20), la membrane (31) est soulevée de l'ouverture de siphon (22).
